# EUROPEAN PATENT APPLICATION

(11) **EP 1 548 664 A1**
(43) Date of publication of application: **29.06.2005**
(21) Application number: 04030521.1
(22) Date of filing: 22.12.2004
(51) Int. Cl.: G07F 7/00

(54) **Customer age verification**

(30) Priority: 22.12.2003 US 743655
(71) Applicant: SYMBOL TECHNOLOGIES, INC., Holtsville, New York 11742-1300 (US)
(72) Inventor: May, Robert, Sayville NY 11782 (US); Shlasko, Michael, Monsey NY 10952 (US); Kahn, Joel, Rockville Centre NY 11570 (US)
(74) Representative: Grünecker, Kinkeldey, Stockmair & Schwanhäusser Anwaltssozietät

(57) **Abstract**

A system that facilitates age verification of machine data reader. A component associated with the machine data reader determines age-related data based at least in part upon data obtained from encoded data on an identification card. A component relays the age-related data to a point-of-sale system in a format that is compatible with the point-of sale system.

## Description

### TECHNICAL FIELD

The present invention generally relates to obtaining data from an identification card, and more particularly relates to verifying an individual's age utilizing a magnetic card reader and/or bar code scanner.

### BACKGROUND OF THE INVENTION

Several existing products available to consumers require a buyer's age to equal or exceed an age established by a local, state, or federal government. For instance, alcoholic beverages require a consumer to be at least twenty-one years of age for legal purchase. Similarly, tobacco products, lottery tickets, and various other products and/or services require a potential purchaser to be a particular age to enable legal obtainment of such products and/or services. Conventional identification cards (*e*.*g*., driver's licenses, military identification cards, ...) include a photograph of an individual that a particular card identifies as well as date of birth or other information that can be utilized to determine the individual's age. Thus, prior to selling an age-restricted item to a prospective buyer, a seller of such item can ensure that the buyer looks substantially similar to the photograph on the identification card, and thereafter review the age information to determine whether the buyer meets a requisite age.

This manner of verifying age, however, has proven problematic. For instance, identification cards can be forged and/or altered, wherein the forged and/or altered card looks substantially similar to a legitimate card to a naked human eye. Furthermore, a seller of such goods can become hurried in light of high customer traffic and not review a photograph and/or age identification information adequately, thus enabling an underage person to obtain age-restricted goods and/or services. Also, human error in calculating an individual's age can result in illegal sale and purchase of age-restricted goods and/or services. Compounding issues related to selling age-restricted goods and/or services is legal liability that a seller can incur from selling age-restricted goods and/or services to a buyer who does not meet a requisite age. For example, a seller can be subject to monetary punishment from a governing body and/or a loss of a license to sell particular age-restricted goods and/or services.

To help mitigate these aforementioned issues relating to age verification, governmental bodies issuing identification cards have placed a magnetic stripes and/or bar codes that include age information on such identification cards. Thus, *via* utilizing a device that can extract data encoded within the magnetic stripes and/or bar codes, a seller of age-restricted goods and/or services can verify that a prospective buyer meets an age required to purchase such goods and/or services. Presently, there exists two types of systems that are capable of extracting age-related data from an identification card and alerting a seller of age-restricted goods that a buyer does or does not meet a requisite age for buying a product. A first type is a stand-alone system that includes an audio and/or visual feedback, wherein the system is dedicated for age-verification purposes. Such systems, however, tend to be expensive and can add clutter and confusion in a buying/selling environment. A second type of system includes a point-of-sale (POS) system and a bar code scanner and/or a magnetic stripe reader. Typically, a reader and/or scanner will decode data on an identification card to a host POS system, and specialized software on the POS system processes the decoded data to facilitate display of age information. Many POS systems, however, do not have an ability to receive age-related data from a bar code scanner and/or magnetic stripe reader originating from a symbol. For instance, a substantial number of host POS systems cannot receive identification card/device data in a portable-data-file (PDF) barcode.

In view of at least the above, there exists a strong need in the art for a system and/or methodology that enables transfer of decoded data from a barcode and/or magnetic stripe reader to a host POS system.

### SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention facilitates age verification without requiring an expensive stand-alone system that is solely dedicated to age verification. The present invention also does not require a separate software application to be integrated within an existing point-of-sale or point-of-service (POS) system. The present invention effectuates age verification on a reader side, and then relays age-related information to a POS system in a format that is readily compatible and utilized by the POS system. As described *supra*, a substantial number of identification cards include a barcode symbol and, magnetic stripe, and/or other machine-readable technology that contains encoded data related to an individual (*e*.*g*., birth date, address, name, ...). While barcode scanners and magnetic stripe readers are referred to as examples throughout, it is to be understood that any machine-readable technology device can be employed and is contemplated by the present invention. For instance, a machine-readable technology device that can read contactless and/or contact integrated circuit technology is contemplated by the present invention and intended to fall within the scope of the hereto-appended claims.

A machine-readable technology device (*e.g.*, a barcode scanner and/or a magnetic stripe reader) reads the encoded data relating to an individual from the identification card that identifies such individual. For example, such identification cards can be drivers' licenses, credit cards, military identifications, or any other card that includes encoded data relating to an individual's age. After the encoded data has been read, it can be decoded and information relating to the individual's age can be isolated from data not related to an individual's age and thereby extracted.

The machine-readable technology device includes a real-time clock that can determine a current date. Thereafter the age-related information can be compared with the current date as determined by the real-time clock to effectuate calculation of the individual's age. For example, the age-related information can include a date of birth, which can then be compared to the current date to determine the individual's age. Upon determining an individual's age, a string that can be received by a POS system is generated and relayed to the POS system. For instance, POS systems utilize strings that identify products scanned by a barcode scanner to determine a price of the product. More particularly, upon scanning an item a barcode scanner can relay a string that identifies that item (*e.g.*, a string ITEM1 corresponds to a particular item). While examples of strings *supra* illustrate alphanumerical characters, it is possible that a POS system only accepts numerical data. In such an instance, the term "string" as utilized in connection with the present invention includes a number or series of numbers (with no letters) that are utilized to identify a product or age. Thus, in accordance with an aspect of the present invention, the barcode scanner can generate a string, such as UNDER18, to the POS system. A lookup table can be provided that indexes the received string to commands/information relating to that string (*e.g.*, in a substantially similar manner that prices and/or commands are indexed to a scanned barcode). In accordance with another aspect of the present invention, the strings identifying age or range of ages of a buyer are utilized as an index to the price lookup table of the POS system, thereby rendering the present invention easy to implement with POS systems currently in use.

In accordance with another aspect of the present invention, a buyer can be automatically prohibited from purchasing age-restricted goods and/or services when the system and/or methodology of the present invention determines that the buyer does not meet the requisite age for such goods. For instance, upon determining that a buyer is less than eighteen years of age, age-restricted items that require the buyer to be at least eighteen years old will be flagged within the POS price lookup table. Thereafter if one of the flagged items is scanned, an alert will be relayed to the seller informing such seller that the buyer is not legally able to purchase the goods and/or services scanned. In accordance with another aspect of the present invention, the barcode scanner and/or magnetic stripe reader will refuse to scan and/or read age-restricted goods and/or services to a buyer who does not meet a requisite age. Furthermore, utilizing one particular aspect of the present invention, an authoritative body can be automatically contacted during an instance that an underage purchaser illegally attempts to buy age-restricted items. Likewise, a report can be automatically generated during an instance that an underage purchaser illegally attempts to purchase age-restricted goods.

To the accomplishment of the foregoing and related ends, the invention then, comprises the features hereinafter fully described and particularly pointed out in the claims. The following description and the annexed drawings set forth in detail certain illustrative aspects of the invention. These aspects are indicative, however, of but a few of the various ways in which the principles of the invention may be employed and the present invention is intended to include all such aspects and their equivalents. Other objects, advantages and novel features of the invention will become apparent from the following detailed description of the invention when considered in conjunction with the drawings.

### BRIEF DESCRIPTION OF THE DRAWINGS

Fig. 1 is a block diagram of a system that facilitates verification of an individual's age based upon encoded data within an identification card in accordance with an aspect of the present invention.
Fig. 2 is an exemplary point-of-sale system that can be employed in accordance with an aspect of the present invention.
Fig. 3 is a block diagram of a system that facilitates verification of an individual's age based upon encoded data within an identification card in accordance with an aspect of the present invention.
Fig. 4 is a flow diagram illustrating a methodology for verifying an individual's age based upon encoded data within an identification card in accordance with an aspect of the present invention.
Fig. 5 is a flow diagram illustrating a methodology for automatically generating a report and/or communicating to an authoritative figure when an underage user illegally attempts to purchase age-restricted goods in accordance with an aspect of the present invention.
Fig. 6 illustrates an exemplary look up table that can be employed in connection with the present invention.
Fig. 7 illustrates an exemplary identification card in accordance with an aspect of the present invention.
Fig. 8 illustrates an exemplary portable barcode scanner that can be employed to verify an individual's age in accordance with an aspect of the present invention.
Fig. 9 is a schematic diagram of a barcode scanner in accordance with an aspect of the present invention.
Fig. 10 is a high-level diagram of an exemplary computing environment in accordance with an aspect of the present invention.

### DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

As used in this application, the terms "component," ''handler,'' "model," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components may communicate *via* local and/or remote processes such as in accordance with a signal having one or more data packets (e.g., data from one component interacting with another component in a local system, distributed system, and/or across a network such as the Internet with other systems *via* the signal).

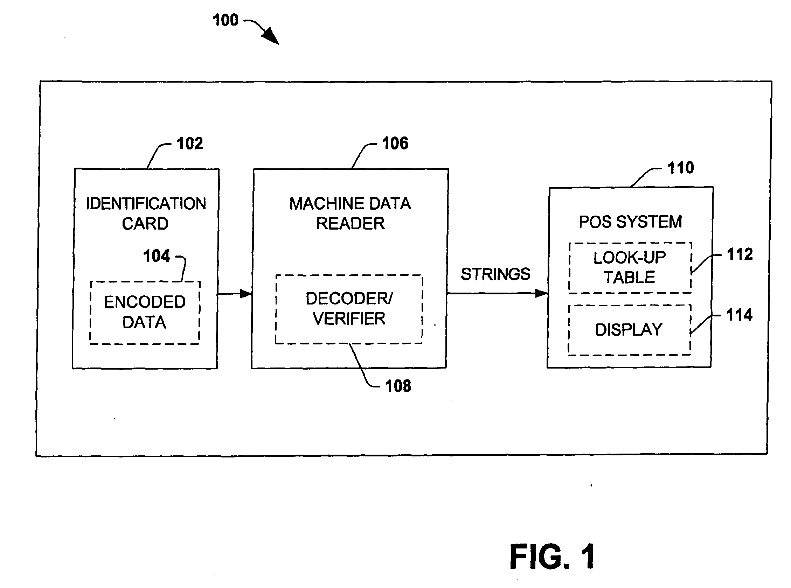

Turning now to Fig. 1, a system 100 that facilitates age verification in connection with a point-of-sale or point-of-service (POS) system is illustrated. The system 100 enables a seller of age-restricted goods to verify age of a prospective buyer without requiring purchase of an expensive stand-alone system. Furthermore, the system 100 mitigates issues related to relaying decoded data from a magnetic stripe reader or barcode scanner to a POS system. For example, conventional POS systems do not have an ability to receive identification card/device data formatted as a portable data file (PDF). This data format allows for a substantial amount of data (up to 1.1 kilobytes of data) to be condensed into a small symbol; thus, the number of identification cards comprising symbols in PDF format is rapidly increasing. PDF file formats are described in United States Patent No. 5,304,786 entitled "High Density Two-Dimensional Bar Code Symbol", which is hereby incorporated by reference.

The system 100 includes an identification card 102 that has encoded age-related data 104 associated therewith. For example, the identification card 102 can include a magnetic stripe, barcode symbol, contact integrated circuit technology, contactless integrated circuit technology, and/or other mechanism(s) that can include the encoded data 104. Bar codes symbols are graphical objects that encode information as alternating dark and light portions (e.g., alternating regions of different light reflectivity, having particular relative heights and/or widths). If a barcode symbol is utilized, such barcode symbol can be a linear symbol (one-dimensional) and/or a two-dimensional symbol, wherein both height and width of marks within the symbol are utilized to represent data. Examples of two-dimensional symboligies that are contemplated by the present invention are PDF417 symbols, Code 49 symbols, *etc*. In particular, PDF417 symbols can comprise a substantial amount of data, and such symbols are extremely difficult to alter while inexpensive to print on an identification card. Still other symbologies have been developed in which the symbol is comprised of a matrix array made up of hexagonal, square, polygonal and/or other geometric shapes. Furthermore, all suitable linear bar codes symbologies, such as UPC/EAN, Code 39, Code 128, Codeabar, and Interleaved 2 of 5, *etc.* are also contemplated by the present invention. The encoded data 104 can be obtained *via* utilizing a machine data reader 106 (*e.g.*, a barcode scanner/magnetic stripe reader) as is known in the art. Magnetic stripes on cards have data encoded thereon in magnetic form that can be extracted *via* a magnetic card reader. Thus, utilizing the machine data reader 106, the encoded data 104 on the identification card 102 can be obtained. Moreover, it is to be understood that the machine data reader 106 can include a plurality of devices that can read the encoded data 104 from the identification card 102. For instance, a barcode scanner and a magnetic stripe reader, both capable of reading the encoded data 104, can be integrated into a single unit with a single connection to a POS system, wherein the machine data reader 106 encompasses the integrated devices alone or in combination.

Upon obtaining the encoded data 104 from the identification card 102, the machine data reader 106 utilizes a decoder/verifier 108 to verify a person's age. The decoder/verifier 108 facilitates decoding the encoded data 104, extracting age information from the encoded data 104, and verifying a person's age based upon the age information. For example, software can be employed within the machine data reader 106 that facilitates locating and extracting age information that was included within the encoded data 104. Furthermore, the decoder/verifier 108 can include a real-time clock that is utilized to compare a data of birth or other age-related date within the encoded data 104 to a current date. Thus, after the encoded data 104 has been decoded by the decoder/verifier 108, age data can be extracted from such data and compared to a current date to verify age within the machine data reader 106. While the previous description discusses age verification occurring within the machine data reader 106, such verification can occur in a device that is physically distinct from the machine data reader 106. For example, the machine data reader 106 can decode the data and thereafter relay such data to a separate attached component that verifies age. After age verification has occurred, the decoder/verifier 108 can generate data strings that are compatible with a POS system 110 that receives the strings. For instance, the decoder/verifier 108 can generate a string that is substantially similar to strings generated when a barcode relating to a product is scanned. More particularly, if the encoded data 104 has information that renders a person identified by the identification card 102 twenty-seven years old, a string that the POS system 110 receives could be utilized to indicate that such individual is twenty-seven years old (*e.g.*, TWENTY_SEVEN). In accordance with another aspect of the present invention, a string could be relayed to the POS system 110 indicating a range of ages. For example, all ages under 18, ages 18-20, and 21 and over could be strings generated by the decoder/verifier 108 to indicate a particular age range of an individual. The strings can be relayed from the machine data reader 106 *via* any suitable means (*e.g.*, wireless network, cable connection, ...).

After the strings are generated, they can be indexed to a lookup table 112 resident on the POS system 110. The lookup table 112 will have commands and/or data corresponding to the known strings, and the POS system 110 will act accordingly. For instance, if a string "OVER21" is received by the POS system 110 and indexed to the lookup table 112, a command corresponding to that string within the lookup table 112 can cause graphics to be shown on a display unit 114 indicating to a seller that an individual is of legal age to purchase alcohol. Furthermore, an audio signal or other means (visual or otherwise) of informing the seller of the individual's age is contemplated by the present invention.

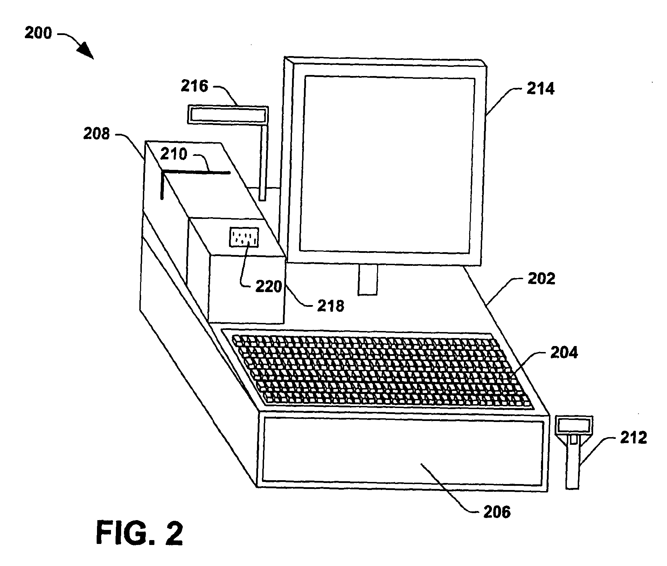

Now referring to Fig. 2, an exemplary POS system 200 and peripherals that can be utilized in connection with the present invention are illustrated. The POS system 200 includes a housing 202 that contains various electronic components, such as a microprocessor, RAM, various hard drives, *etc*. For instance, memory within the electronic components can include a price lookup table that can be utilized as described *supra*. The POS system 200 can also include a keyboard 204 to enable a salesclerk to manually enter information relevant to a sale or a user's identification and/or age. The POS system also comprises a cash register 206 for exchange of money with a customer upon completion of a sale. A magnetic stripe reader 208 is employed in connection with the POS system 200 to enable a user to pay for items *via* credit card, and also for age verification purposes. For instance, an identification card (not shown) can include a magnetic stripe that in turn comprises information related to an individual's age. Upon inserting and removing a card through a slot 210 in the magnetic stripe reader 208, components within the magnetic stripe reader 210 can determine an individual's age *via* extracting age information from information encoded on the electronic stripe and comparing such information with current date/time information. A real-time clock can be utilized within the magnetic stripe reader 208 to facilitate a comparison between current date/time and age information encoded into the magnetic stripe.

Thereafter, the magnetic stripe reader 208 can include software that converts computed age or range of age to a format that can be received by electronic components within the housing 202. For instance, age related data can be converted to a format that corresponds to a format utilized by the POS system 200 to interpret standard barcode information (*e.g.*, information obtained when scanning a product by a barcode scanner). Furthermore, the POS system 200 can be associated with a barcode scanner 212, which extracts age-related data from a barcode symbol that is printed on an identification card. The barcode on the identification card can be linear, two-dimensional, or otherwise. Like the magnetic stripe reader 208, the barcode scanner 212 includes software that can locate and extract age-related data from a symbol, and compare such age related data with a current date/time *via* employing an internal real-time clock. Thereafter, data can be converted to a format acceptable by the POS system 200, and relayed to such system 200. A lookup table can be utilized to index data received from the barcode scanner 212 with an appropriate response from the POS system 200. For instance, the barcode scanner 212 can relay age-related data in known strings, wherein the strings are indexed with corresponding commands and/or information within the lookup table. More particularly, a string such as "UNDER18" can be generated within the barcode scanner 212 and relayed to the lookup table where such string has a pre-defined indexation to a command and/or information. For example, the POS system 200 includes a display 214 that can display information to a seller. Utilizing the previous example of a string "UNDER18", a command corresponding to such string in the lookup table can cause the display 214 to generate graphics that inform a seller that the purchaser cannot purchase tobacco products or alcohol. Commands can also cause speakers, alone or in combination with a graphical display, to output information informing the seller of age information of a buyer. It is to be understood that other suitable manners of informing a seller of age information extracted from an identification card are contemplated by the present invention and intended to fall within the scope of the hereto-appended claims.

The POS system 200 can also include a display 216 that informs a purchaser of a status of purchase. In connection with age information, the display 216 can illustrate to a buyer that his identification card contains information stating that he/she is a particular age. The POS system 200 can also include a printer 218 for printing a receipt of sale 220 to a purchaser, and can include an age determined utilizing the present invention. While Fig. 2 illustrates the barcode scanner 212 as being a trigger-operated barcode scanner that is physically separate from the POS system 200, it is to be understood that various other barcode scanners are contemplated. For example, the barcode scanner 212 can be positioned relative to a conveyor underneath a window as is typical in a grocery or retail store. Likewise, the magnetic stripe reader 210 can be physically separated from the housing 202 of the POS system 200, and coupled to the POS system 200 *via* a wireless connection, cable connection, *etc*.

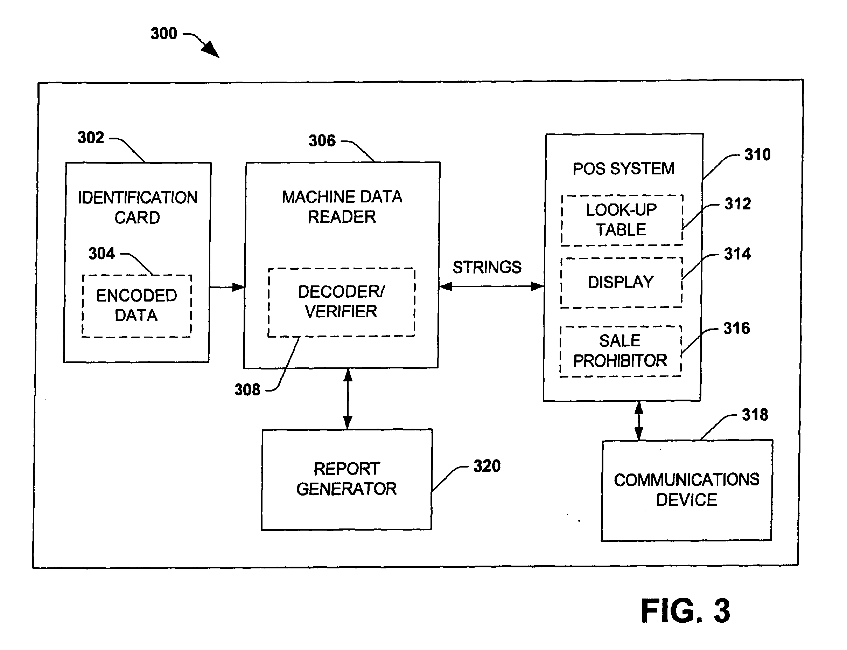

Now referring to Fig. 3, a system that facilitates age verification is illustrated. The system 300 includes an identification card 302 whose purpose is to identify an individual, wherein the identification card has encoded data 304 attached or printed onto such card 302. The encoded data 304 can include a substantial amount of data related to the user, including age information. A machine data reader 306 scans a barcode and/or a magnetic stripe, and obtains the encoded data 304 from the identification card 302. The machine data reader 306 can be a barcode scanner, magnetic stripe reader, contact and/or contactless integrated circuit technology reader, or any other suitable device capable of reading the encoded data 304. The machine data reader 306 includes a decoder/verifier 308 that decodes the encoded information 304 and extracts age-related data from such information. The decoder/verifier 308 also includes a real-time clock, thus allowing dated information to be compared with a current date. For example, most drivers' licenses include an individual's date of birth. Thus, comparing such date of birth with a present date as calculated by the real-time clock provides for age verification within the machine data reader 306. The decoder/verifier 308 can then generate a string of data in a format that is readily compatible with data utilized by a POS system 310. For instance, typical POS systems receive data strings obtained from linear barcodes that identify products within a store upon a barcode scanner scanning such barcodes. The decoder/verifier 308 can convert age related data into a similar string, thus enabling the POS system 310 to receive the age information.

The POS system 310 includes a lookup table 312 that enables the string to be associated with commands relating to such string. For instance, a string of "26YEARS" can be relayed to the POS system 310 and indexed with a particular position within the lookup table 312. Commands corresponding to the position within the lookup table 312 can cause graphical display of age information on a display 314, audio alerts of age information, or other similar communication to a seller of goods regarding a user's age. The POS system 310 can also include a sale prohibitor component 316 that can prohibit sale of particular items given an individual's age. For instance, the sale prohibitor 316 would prevent processing and sale of a proposed purchase of tobacco to an individual whose age is under a requisite age. More particularly, data relating to age-restricted goods within the lookup table 312 can be marked or flagged. Upon obtaining age-related information from the machine data reader 306, the sale prohibitor 316 can prevent processing and sale of age-restricted goods desirably purchased by an underage buyer. The sale prohibitor 316 thus mitigates human error that can occur when selling age-restricted goods.

In accordance with another aspect of the present invention, the sale prohibitor 316 can operate in connection with a communications device 318 that informs a department manager, security guard, or police station of an individual attempting to purchase age-restricted goods who is not of legal age to purchase such goods. For instance, the sale prohibitor 316 can be connected to a network, thus facilitating automatic communication to a relevant person upon an illegal attempted purchase of age-restricted goods. The communication device 318 can be a cellular phone, computer, pager, etc. Such an embodiment would thus further mitigate illegal attempted purchases of age-restricted goods.

Furthermore, the system 300 can include a report generator 320 that is coupled to the machine data reader 306. The report generator 320 can automatically generate a report relating to an individual who is illegally attempting to purchase age-restricted goods. For example, the sale prohibitor 316 can determine that a buyer is illegally attempting to obtain age-restricted goods and/or services, and can inform the machine data reader 306 of such illegal attempted purchase. The machine data reader 306 can include enough memory to temporarily store user information that is encoded onto the identification card 302, and employ such information in generating a report. Thus, a report can be generated that includes an individual's name, address, and age as encoded on the identification card, together with an identification of a good that the individual attempted to purchase. Furthermore, the report generator 320 can operate in connection with a network (not shown) that facilitates automatically relaying such message to a relevant authority. Such an embodiment would mitigate human errors that can occur in selling age-restricted goods, and further operate as a deterrent to underage purchasers of age-restricted goods.

In accordance with another aspect of the present invention, data extracted from the encoded data 104 can be utilized in connection with attempting to locate particular individuals that a local, state, federal, and/or international authoritative body is searching for. For instance, the POS system 310, the machine data reader 306, and/or an external database that can be accessed by the POS system 310 and/or the machine data reader 306 can include a listing of such individuals and data associated with the individuals (*e*.*g*., name, height, weight, birth date, ...). Upon obtaining the encoded data and verifying the individual's age, the list of individuals can be searched. For example, the list of "wanted" individuals can be searched based on current age. If the list does not include a person with the verified age, then the purchaser can buy items normally. Alternatively, in an instance the list of individuals does include a person with an age substantially similar to the verified age, then a more robust search can be completed (e.g., based on an individual's name, height, weight). If the encoded data substantially matches data corresponding to a person on the "wanted" list, then the communications device 318 can be utilized to immediately contact an authority. Similarly, the report generator 320 can be employed to generate a report and, if desirable, automatically relay the report to an appropriate authority.

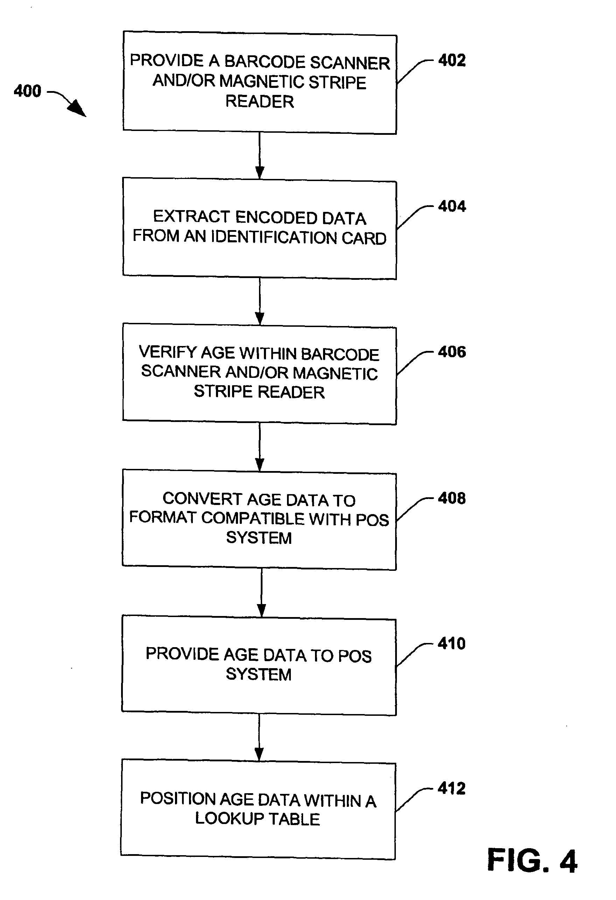

Referring now to Fig. 4, a methodology 400 for verifying age from an identification card is illustrated. While, for purposes of simplicity of explanation, the methodology 400 is shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

At 402, a machine data reader is provided. For example, the machine data reader can be a barcode scanner, magnetic stripe reader, or other suitable device that can read encoded data from an identification card. For example, if the machine data reader is a barcode scanner, the barcode scanner can be attached to a POS system or can be physically independent from a POS system (*e*.*g*., the barcode scanner can be a hand-held scanner operable *via* a trigger). Furthermore, the barcode scanner can be physically integrated with another device that can read encoded data and connected to a POS system *via* a single connection. Alternatively, the barcode scanner can be integrated with a POS system. For instance, the barcode scanner can be positioned under a window, as is typical in a retail or grocery store setting, and appear to be physically coupled to the POS system.

At 404, encoded data is extracted from an identification card. Typically, identification cards such as drivers' licenses include a barcode, magnetic stripe, and/or other suitable mechanisms for enabling encoded data to be resident on the identification card whereby such mechanisms comprise data related to the individual that the identification card purports to identify. Such information can include date of birth, address, name, and other information related to an individual. For instance, to extract the encoded data, a barcode scanner can be employed to scan a barcode on an identification card. In another example, the identification card can be inserted and removed from a magnetic stripe reader to enable extraction of encoded data.

At 406, age of an individual identified by the identification card is verified. The machine data reader can include a component that locates age-related data extracts such data from other data encoded into the identification card. The machine data reader also includes a real-time clock. Thus, date of birth information contained within the data encoded into the identification card can be compared with a current date, thereby verifying an individual's age.

At 408, the verified age data is converted into a format that is compatible with the POS system that will receive the data. For instance, typical POS systems do not have capabilities of receiving a high-density PDF file. However, POS systems can receive data in conventional linear barcode format. Thus, the age-related data is converted into a string that can be accepted by a POS system. For example, a string of "18T021" would be acceptable by the POS system and would indicate that an individual is between ages 18 and 21.

At 410, age related data is provided to the POS system. A wireless or wireline connection can be employed to facilitate transfer of such data between the barcode scanner and/or magnetic stripe reader and the POS system. At 412, the age-related data is indexed to a lookup table. The lookup table facilitates indexing age-related data to corresponding information and/or commands. For example, if the age-related data indicated that an individual is over twenty-one years of age, a command to inform a seller of goods that the individual can legally obtain alcohol could be automatically initiated.

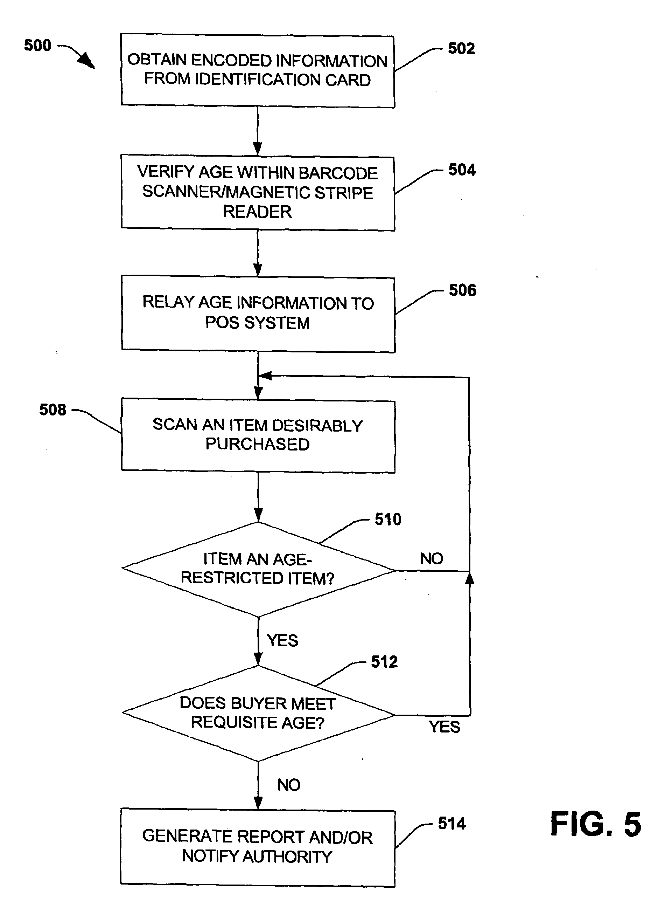

Turning now to Fig. 5, a methodology 500 for automatically generating a report to an authority or notifying an authority relating to an illegal attempted purchase of age-related goods is illustrated. At 502, encoded information is obtained from an identification card *via* a machine data reader. For example, a barcode scanner (one example of a machine data reader) can scan a barcode on an identification card and/or a magnetic stripe reader (another example of a machine data reader) can read a magnetic stripe present on an identification card to obtain encoded data relating to an individual. At 504, age of a purchaser is verified within the machine data reader *via* utilizing a component that extracts and isolates age-related data from the encoded data and comparing such data to a current date (*e.g.*, data or birth information can be compared to current date). A real-time clock can be provided within the machine data reader to facilitate comparison of date of birth with current date.

At 506, age information is relayed to a POS system in a format that is compatible with the POS system. For example, a string that is formatted similarly to a linear bar code can be generated within the machine data reader and relayed to the POS system. Thereafter such age information can be indexed to a lookup table and corresponding information and/or commands related to such age information (*e*.*g*., indexing age information to the lookup table can cause an audio and/or video notification of the individual's age to a seller of goods). At 508 an item is scanned as is conventional in retail and grocery settings. At 510 a determination is made regarding whether the scanned item is an age-restricted item. If the item is not an age-restricted item, another item is scanned at 508. If the desirably purchased goods are age-restricted, a determination is made at 512 regarding whether the individual meets a requisite age requirement (e.g., a buyer must be 18 to purchase alcohol). If the buyer meets the requisite age, another item can be scanned at 508. If the buyer does not meet the requisite age, then a report is automatically generated and/or a proper authority is notified of an illegal attempted purchase of age-restricted goods. If a report is generated, it can be automatically delivered to an appropriate authority *via* email, text message, or other suitable messaging technique. Similarly, any suitable method of notifying a relevant party that an illegal attempted purchase of age-restricted goods has occurred is contemplated by the present invention (*e.g.*, audio notification, visual notification, vibration of a pager, ...). Furthermore, while the methodology 500 illustrates that age information is obtained prior to scanning items, it is understood that age information can be obtained after items have been scanned. For example, scanned items can be placed in memory of the POS. After age information has been verified within the barcode scanner and relayed to the POS system, the scanned items within memory can be reviewed to determine whether any of such items are age-restricted items.

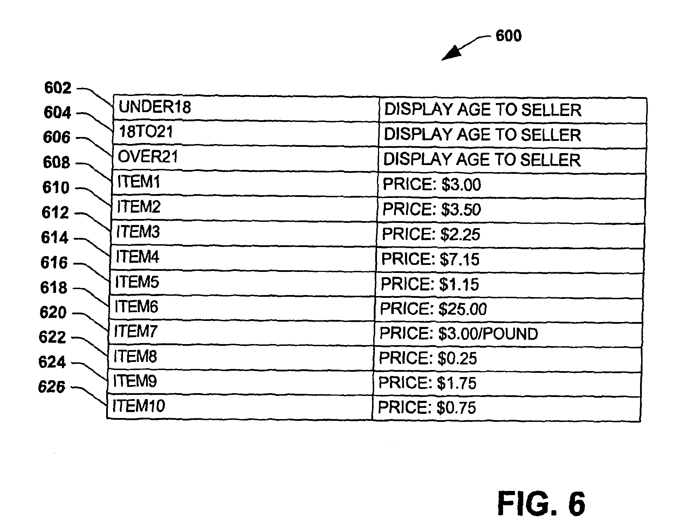

Now referring to Fig. 6, an exemplary price lookup table 600 that can be employed in connection with the present invention is illustrated. The price lookup table illustrates an indexation of age-related data to commands and/or information as well as an indexation of item-related data to commands and/or information relating to price. The lookup table 600 illustrates an indexation of entries 602, 604, and 606 that can be received from a machine data reader relating to an individual's age. Because the entries 602, 604, and 606 are formatted according to an acceptable format, they can be received by substantially all POS systems. Thus, for example, in an instance that a machine data reader verified that an individual's age was under 18, it could relay the string "UNDER18" to the POS system. The string would be entered into entry 602, and a command to display an age of the user would correspond to such string within the price lookup table 600. Entries 608-626 are for items that can be purchased from a seller of goods and/or services and have corresponding prices within the price lookup table. Thus, if an item corresponding to ITEM3 at entry 612 is scanned, the price lookup table 600 can be employed to determine that a price associated with ITEM3 is $2.25. The price lookup table 600 illustrates that a single machine data reader can be employed to verify age and scan items and/or services regularly sold at a particular establishment, and a separate system for age verification is not required.

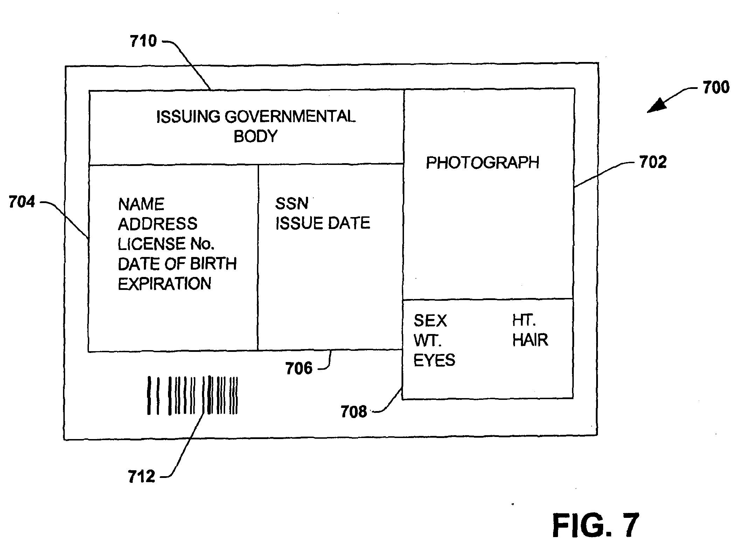

Now referring to Fig. 7, an exemplary identification card 700 that can be employed in connection with the present invention is illustrated. The identification card can be a drivers' license, a smart card, a military identification card, credit card, debit card, or other suitable card that comprises encoded data relating at least to an individual's age. The identification card 700 includes a photograph 702 of an individual that the identification card 700 identifies, along with a section 704 for name, current address, license number, date of birth, and various other information related to the individual. The identification card 700 also includes a section 706 for social security number and issue date of the identification card 700. A section 708 also is included within the identification card 700 that includes information relating to a person's physical appearance, such as sex, height, weight, hair color, eye color, etc. A section 710 can identify a governmental body that issued the identification card 700. The identification card 700 also includes a barcode 712 that comprises a substantial amount of information relating to the individual. For example, the barcode 712 can contain all information contained within sections 702-710, along with other information related to the individual. Furthermore, while not illustrated with respect to this figure, a magnetic stripe containing information related to an individual can be included on the identification card (e.g., on a reverse side of the identification card). In accordance with an aspect of the present invention, the barcode 712 and/or a magnetic stripe can be scanned to extract data there from. Age related data can then be isolated, and an age of an individual can be determined within the barcode scanner and/or magnetic stripe reader. Thereafter an individual's age or age range can be relayed to a POS system in a format compatible with such POS system. While the identification card 700 is shown to be a similar to a driver's license, it is understood that the identification card can be a credit card, military identification card, or any other card that contains data related to an individual's age. Furthermore, the identification card 700 can include other forms of encoded data. For instance, contact and/or contactless integrated circuit technology can be employed to encode data within the identification card 700. This and other suitable manners of encoding data relating to the identification card 700 is contemplated by the present invention and intended to fall within the scope of the hereto-appended claims.

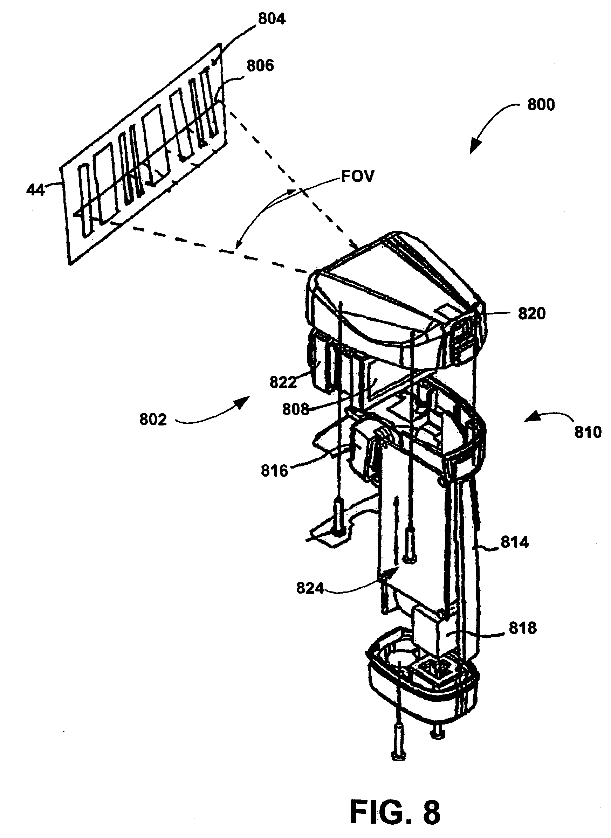

Referring now to Fig. 8, an exemplary portable hand-held data collection device that can be employed in connection with the present invention is illustrated generally at 800. The device 800 includes a scan engine or photo sensor array imaging assembly 802 that is capable of imaging a target data form 804 located within an imaging target area 806 of the scan engine 802. The scan engine 802 includes a single mirror and single lens assembly wherein the mirror provides to the lens a field of view FOV. The mirror is arranged to direct an image received from the field of view FOV along a target line 808 to a photo sensor array 810. An image processing circuit coupled to the photo sensor array 810 receives pixel data from each zone of the photo sensor array 810 and reconstructs the image directed by the mirror along the target line 808.

The data collection device 800 includes a housing 812 defining an interior region for containing various mechanical and electrical components as described herein. The housing 812 includes a gripping portion 814 sized to be grasped in the hand of an operator. Coupled to the housing 812 is a data form reading trigger switch or actuator 816. The data form reading trigger switch 816 is positioned to be depressed by an index finger of the operator while the gripping portion 814 of the housing 812 is held in the operator's hand. Also supported within the housing 812 is a power source 818 such as a rechargeable battery for supplying operating power to the portable data collection device 800.

The housing 812 also includes a small opening through which a portion of an indicator light emitting diode (LED) 820 is visible. The indicator LED 820 alternates between three colors. The color green is displayed by the indicator LED 820 when the device 800 is on standby, ready for use. The color orange is displayed with the device 800 has successfully completed an operation such as decoding a target data form. The color red is displayed when the device 800 is not ready to perform an operation. Device 800 may alternatively or in combination include a speaker or other audio enunciator (not shown) by which a user may be signaled that a successful data form scan operation has been completed.

The scan engine 802 is disposed within a top portion of the housing 812 and includes the lens (not shown), mirror assembly 822, photo sensor array 810 and illumination assembly (not shown). In the present embodiment of the invention, the illumination assembly is an array of LEDs, however, it will be appreciated that various other illumination sources such as a laser assembly could alternatively be used. The scan engine 802 derives electrical power from the power source 818 via electrical connections (not shown) passing through a host interface board 824. Interface board 824 may further include the data form reading trigger switch 816 and associated circuitry (not shown), an audio speaker to indicate to a user that a successful scan has occurred, a power detector component (not shown), and a communications transceiver.

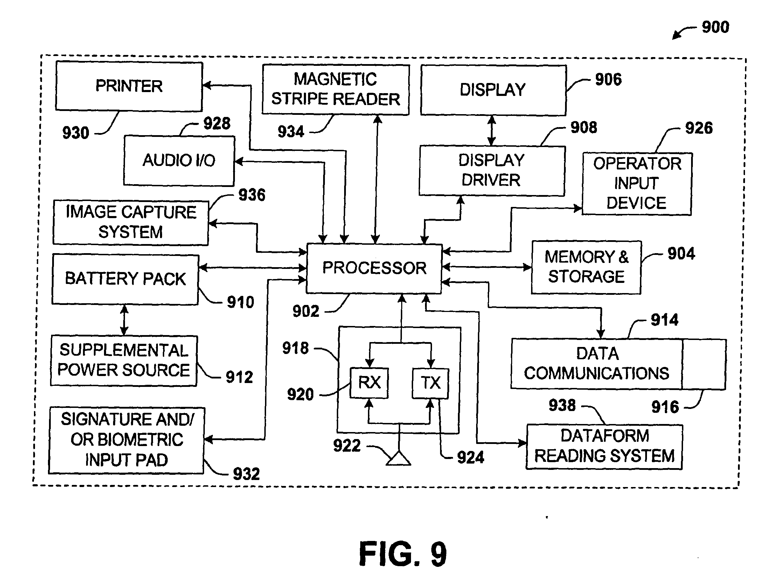

Referring now to FIG. 9, there is illustrated a schematic block diagram of an exemplary portable machine data reading device 900 according to one aspect of the present invention, in which a processor 902 is responsible for controlling the general operation of the device 900. The processor 902 is programmed to control and operate the various components within the device 900 in order to carry out the various functions described herein. The processor 902 may be any of a plurality of suitable processors. The manner in which the processor 902 can be programmed to carry out the functions relating to the present invention will be readily apparent to those having ordinary skill in the art based on the description provided herein.

A memory 904 connected to the processor 902 serves to store program code executed by the processor 902, and also serves as a storage means for storing information such as receipt transaction information and the like. The memory 904 may be a nonvolatile memory suitably adapted to store at least a complete set of the information that is displayed. Thus the memory 904 may include a RAM memory for high-speed access by the processor 902 and/or a mass storage memory, e.g., a micro drive capable of storing gigabytes of data that comprises text, images, audio, and video content. According to one aspect, the memory 904 has sufficient storage capacity to store multiple sets of information, and the processor 902 could include a program for alternating or cycling between various sets of display information.

A display 906 is coupled to the processor 902 *via* a display driver system 908. The display 906 may be a color liquid crystal display (LCD) or the like. In this example, the display 906 is a ¼ VGA display with sixteen levels of gray scale. The display 906 functions to present data, graphics, or other information content. For example, the display 906 may display a set of customer information, which is displayed to the operator and may be transmitted over a system backbone (not shown). Additionally, the display 906 may display a variety of functions that control the execution of the device 900. The display 906 is capable of displaying both alphanumeric and graphical characters.

Power is provided to the processor 902 and other components forming the hand-held device 900 by an onboard battery system 910. In the event that the battery system 910 fails or becomes disconnected from the device 900, a supplemental power source 912 can be employed to provide power to the processor 902 and to charge the battery system 910. The processor 902 of the mobile device 900 induces a sleep mode to reduce the current draw upon detection of an anticipated battery failure.

The mobile terminal 900 includes a communication subsystem 914 that includes a data communication port 916, which is employed to interface the processor 902 with a remote computer. The port 916 includes at least the USB and IEEE 1394 serial communications capabilities described hereinabove. Other technologies may also be included, for example, infrared communication utilizing an IrDA port.

The mobile device 900 also includes an RF transceiver section 918 in operative communication with the processor 902. The RF section 918 includes an RF receiver 920, which receives RF signals from a remote device *via* an antenna 922 and demodulates the signal to obtain digital information modulated therein. The RF section 918 also includes an RF transmitter 924 for transmitting information to a remote device, for example, in response to manual user input *via* a user input device 926 (*e.g.*, a keypad) or automatically in response to the completion of a transaction or other predetermined and programmed criteria. The transceiver section 918 facilitates communication with a transponder system, either passive or active, that is in use with product or item RF tags. The processor 902 signals (or pulses) the remote transponder system *via* the transceiver 918, and detects the return signal in order to read the contents of the tag memory. The RF section 918 further facilitates telephone communications using the device 900. In furtherance thereof, an audio I/O section 928 is provided as controlled by the processor 902 to process voice input from a microphone (or similar audio input device) and audio output signals (from a speaker or similar audio output device). In further support thereof, the device 900 may provide voice recognition capabilities such that when the device 900 is used simply as a voice recorder, the processor 902 may facilitate high-speed conversion of the voice signals into text content for local editing and review, and/or later download to a remote system, such as a computer word processor. Similarly, the converted voice signals may be used to control the device 900 instead of using manual entry *via* the keypad.

Onboard peripheral devices, such as a printer 930, signature and/or biometric input pad 932, and a magnetic stripe reader 934 can also be provided within the housing of the device 900 or accommodated externally through one or more of the external port interfaces 916.

The device 900 also includes an image capture system 936 such that the user may take pictures and/or short movies for storage by the device 900 and presentation by the display 906. Additionally, a data form reading system 938 is included for scanning data forms associated with articles of commerce. It is to be appreciated that these imaging systems (936 and 938) may be a single system capable of performing both functions.

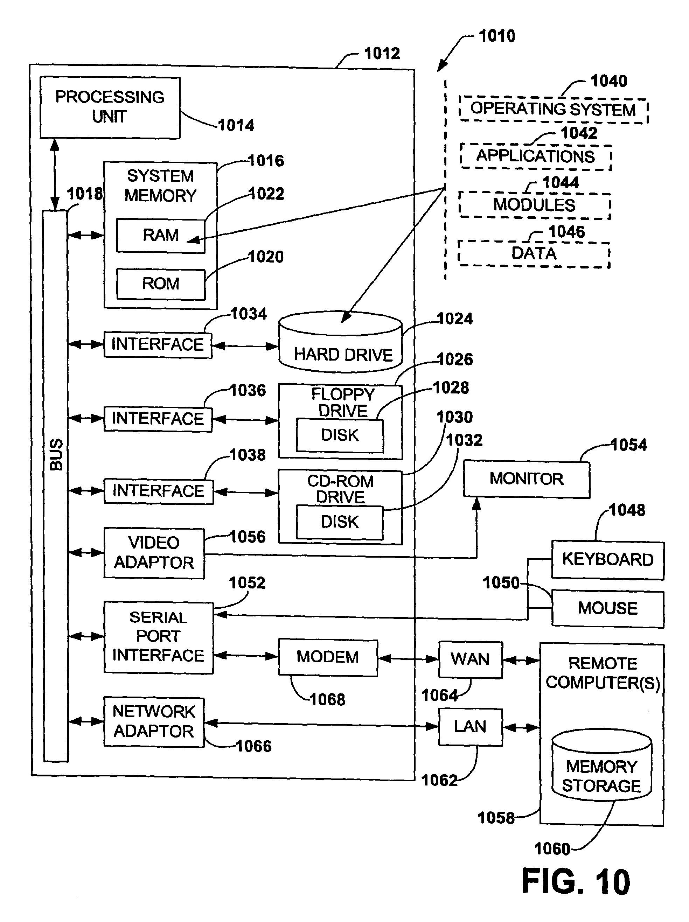

In order to provide additional context for various aspects of the present invention, Figure 10 and the following discussion are intended to provide a brief, general description of a suitable computing environment 1010 in which the various aspects of the present invention can be implemented. While the invention has been described above in the general context of computer-executable instructions that may run on one or more computers, those skilled in the art will recognize that the invention also may be implemented in combination with other program modules and/or as a combination of hardware and software. Generally, program modules include routines, programs, components, data structures, etc. that perform particular tasks or implement particular abstract data types. Moreover, those skilled in the art will appreciate that the inventive methods may be practiced with other computer system configurations, including single-processor or multiprocessor computer systems, minicomputers, mainframe computers, as well as personal computers, hand-held computing devices, microprocessor-based or programmable consumer electronics, and the like, each of which may be operatively coupled to one or more associated devices. The illustrated aspects of the invention may also be practiced in distributed computing environments where certain tasks are performed by remote processing devices that are linked through a communications network. In a distributed computing environment, program modules may be located in both local and remote memory storage devices.

With reference to Figure 10, an exemplary environment 1010 for implementing various aspects of the invention includes a computer 1012, including a processing unit 1014, a system memory 1016, and a system bus 1018 that couples various system components including the system memory to the processing unit 1014. The processing unit 1014 may be any of various commercially available processors. Dual microprocessors and other multi-processor architectures also can be used as the processing unit 1014.

The system bus 1018 can be any of several types of bus structure including a memory bus or memory controller, a peripheral bus, and a local bus using any of a variety of conventional bus architectures such as PCI, VESA, Microchannel, ISA, and EISA, to name a few. The system memory 1016 includes read only memory (ROM) 1020 and random access memory (RAM) 1022. A basic input/output system (BIOS), containing the basic routines that help to transfer information between elements within the computer 1012, such as during start-up, is stored in ROM 1020.

The computer 1012 further includes a hard disk drive 1024, a magnetic disk drive 1026 to read from or write to, for example, a removable disk 1028, and an optical disk drive 1030 for reading, for example, from a CD-ROM disk 1032 or to read from or write to other optical media. The hard disk drive 1024, magnetic disk drive 1026, and optical disk drive 1030 are connected to the system bus 1018 by a hard disk drive interface 1034, a magnetic disk drive interface 1036, and an optical drive interface 1038, respectively. The drives and their associated computer-readable media provide nonvolatile storage of data, data structures, computer-executable instructions, *etc*. for the computer 1012, including for the storage of broadcast programming in a suitable digital format. Although the description of computer-readable media above refers to a hard disk, a removable magnetic disk and a CD, it should be appreciated by those skilled in the art that other types of media which are readable by a computer, such as magnetic cassettes, flash memory cards, digital video disks, Bernoulli cartridges, and the like, may also be used in the exemplary operating environment, and further that any such media may contain computer-executable instructions for performing the methods of the present invention.

A number of program modules may be stored in the drives and RAM 1022, including an operating system 1040, one or more application programs 1042, other program modules 1044, and program data 1046. The operating system 1040 in the illustrated computer is, for example, the "Microsoft® Windows® NT" operating system, although it is to be appreciated that the present invention may be implemented with other operating systems or combinations of operating systems, such as UNIX®, LINUX®, etc.

A user may enter commands and information into the computer 1012 through a keyboard 1048 and a pointing device, such as a mouse 1050. Other input devices (not shown) may include a microphone, an IR remote control, a joystick, a game pad, a satellite dish, a scanner, or the like. These and other input devices are often connected to the processing unit 1014 through a serial port interface 1052 that is coupled to the system bus 1018, but may be connected by other interfaces, such as a parallel port, a game port, a universal serial bus ("USB"), an IR interface, etc. A monitor 1054 or other type of display device is also connected to the system bus 1018 *via* an interface, such as a video adapter 1056. In addition to the monitor, a computer typically includes other peripheral output devices (not shown), such as speakers, printers etc.

The computer 1012 may operate in a networked environment using logical connections to one or more remote computers, such as a remote computer(s) 1058. The remote computer(s) 1058 may be a workstation, a server computer, a router, a personal computer, microprocessor based entertainment appliance (*e*.*g*., a WEBTV® client system), a peer device or other common network node, and typically includes many or all of the elements described relative to the computer 1012, although, for purposes of brevity, only a memory storage device 1060 is illustrated. The logical connections depicted include a local area network (LAN) 1062 and a wide area network (WAN) 1064. Such networking environments are commonplace in offices, enterprise-wide computer networks, intranets and the Internet.

When used in a LAN networking environment, the computer 1012 is connected to the local network 1062 through a network interface or adapter 1066. When used in a WAN networking environment, the computer 1012 typically includes a modem 1068, or is connected to a communications server on the LAN, or has other means for establishing communications over the WAN 1064, such as the Internet. The modem 1068, which may be internal or external, is connected to the system bus 1018 *via* the serial port interface 1052 to enable communications, for example, *via* POTS. The modem 1068 may also, in an alternative embodiment, be connected to the network adaptor 1066 to enable communications, for example, *via* DSL or cable. In a networked environment, program modules depicted relative to the computer 1012, or portions thereof, will be stored in the remote memory storage device 1060. It may be appreciated that the network connections shown are exemplary and other means of establishing a communications link between the computers may be used.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system that facilitates age verification of an individual, comprising:
a machine data reader, the machine data reader associated with a verification component that determines age-related data information at least in part upon encoded data on an identification card read by the machine data reader; and
a component that relays the age-related information to a point-of-sale system in a format that is compatible with the point-of sale system.

2. The system of claim 1, the machine data reader comprising a component that isolates and extracts age-related information from the encoded data.

3. The system of claim 1, the determined age relayed to the point-of-sale system as a known string.

4. The system of claim 3, the known string indexed to a lookup table within the point-of-sale system, and the point-of-service system executing a command based upon the entry.

5. The system of claim 4, the lookup table being a price lookup table.

6. The system of claim 1, the point-of-sale system comprising a display unit that displays the age-related data.

7. The system of claim 1, further comprising a component that automatically prohibits sale of at least one of age-restricted goods and age-restricted services to a buyer who does not meet a requisite age.

8. The system of claim 1, further comprising a component that automatically delivers a notification to an authoritative body in an instance that a buyer who does not meet a requisite age attempts to purchase at least one of age-restricted goods and age-restricted services.

9. The system of claim 1, further comprising a component that automatically generates a report in an instance that a buyer who does not meet a requisite age attempts to purchase at least one of age-restricted goods and age-restricted services.

10. The system of claim 8, the report automatically delivered to an authoritative body.

11. The system of claim 1, the machine data reader being at least one of a barcode scanner and a magnetic stripe reader.

12. The system of claim 1, the age-related information being a range of ages.

13. The system of claim 1, the age-related information being an age.

14. The system of claim 1, the verification component comprising a real-time clock, the age-related information at least partially determined by comparing age information extracted from the identification card to a current date as calculated by the real-time clock.

15. The system of claim 1, further comprising a component that searches a list of individuals wanted by an authoritative body, the list comprising data relating to the individuals, and the search performed by comparing the data relating to the individuals with the encoded data.

16. The system of claim 15, wherein the authoritative body wanting an individual is automatically contacted upon at least a partial match of data relating to the individual in the list and the encoded data.

17. The system of claim 1, the identification card being one of a driver's license, a military identification card, a credit card, a debit card, and a smart card.

18. A method for verifying an age of an individual, comprising:
providing a machine data reader;
extracting data relating to an individual from an identification card *via* the machine data reader;
determining age-related information of an individual identified by the identification card based at least in part upon the extracted data; and
generating a string that is received by a point-of-sale system, the string identifying at least one of an age and range of ages of the individual.

19. The method of claim 17, further comprising informing a seller of age-restricted goods of at least one of the individual's age and a range of ages that the individual's age resides.

20. The method of claim 19, the seller informed of the at least one of the individual's age and the range of ages that the individual's age resides by a display of the point-of-service system.

21. The method of claim 18, the age-related information at least partially determined by comparing age information within the extracted data to a current date.

22. The method of claim 18, further comprising:
indexing the string to a lookup table within the point-of-sale system; and
initiating a command corresponding to the indexing.

23. The method of claim 18, further comprising automatically prohibiting sale of at least one of age-restricted goods and age-restricted services to the individual if the individual does not meet a requisite age.

24. The method of claim 18, further comprising automatically notifying an authoritative body when the individual does not meet a requisite age and attempts to illegally purchase at least one of age-restricted goods and age-restricted services.

25. The method of claim 18, further comprising automatically generating a report when the individual does not meet a requisite age and attempts to illegally purchase at least one of age-restricted goods and age-restricted services.

26. The method of claim 25, the report comprising the individual's name, age, and the at least one of age-restricted goods and age-restricted services that the individual attempted to purchase.

27. The method of claim 18, further comprising:
searching a list of individuals wanted by at least one of an international, federal, state, and local authoritative body, the list comprising data related to the individuals;
comparing the data related to the individuals with the extracted data; and
automatically contacting the at least one of the international, federal, state, and local authoritative body upon at least a partial match between the extracted data and the data related to the individuals.

28. A system that verifies an age of an individual, comprising:
a machine data reader that reads encoded information from an identification card related to an individual, , the encoded information comprising a birth date, and the machine data reader comprising:
a real-time clock that determines a current date;
a component that compares the birth date with the current date; and
a component that generates a string that is acceptable by a point-of-sale system, the string based at least in part upon the comparison between the birth date and the current date.

29. The system of claim 28, the point-of-sale system receives the string and indexes the string to a lookup table, and data at least partially based upon the comparison between the birth date and the current date is relayed to a seller upon indexing the string to the lookup table.

30. The system of claim 29, the lookup table further indexing strings that identify at least one of items and services that are sold at the point-of-sale system, wherein age-restricted items are flagged.

31. The system of claim 30, an individual prevented from buying age-restricted goods and/or services when the individual does not meat a requisite age based at least in part upon the flags.

32. The system of claim 31, the encoded data comprising data not related to age.

33. The system of claim 32, further comprising a component that isolates the birth date from the data not related to age and extracts the birth date.

34. The system of claim 28, the machine data reader comprising a bar code scanner, the bar code scanner scans barcodes relating to at least one of a good and a service sold at a point-of-sale system.
